# EUROPEAN PATENT SPECIFICATION

(11) **EP 2 878 408 B1**
(45) Date of publication and mention of the grant of the patent: **21.12.2016**
(21) Application number: 14192401.9
(22) Date of filing: 09.11.2014
(51) Int. Cl.: B23H 7/06, F16C 33/66, F16C 19/52

(54) **Wire electric discharge machine**
Drahterodiermaschine
Machine de décharge électrique à fil

(30) Priority: 28.11.2013 JP 2013246287
(43) Date of publication of application: 03.06.2015
(73) Proprietor: FANUC CORPORATION, Oshino-mura Minamitsuru-gun Yamanashi 401-0597 (JP)
(72) Inventor: Kouda, Hisanori, Minamitsuru-gun, Yamanashi 401-0597 (JP)
(74) Representative: Ward, James Norman

(56) References cited:
- EP-A2- 2 295 180
- JP-A- 2000 018 243
- US-B1- 6 196 725

## Description

### BACKGROUND OF THE INVENTION

### Field of the Invention

The present invention relates to a wire electric discharge machine, and more particularly, to a wire electric discharge machine having a function of suppressing wear of driving parts.

### Description of the Related Art

A wire electric discharge machine performs electric discharge machining in such a manner that a wire electrode stretched tight between two wire guides is moved as a voltage is applied to a gap between the wire electrode and a workpiece located between the two wire guides.

The conventional wire electric discharge machine suffers a phenomenon that each machined groove cut in the workpiece by the wire electrode is wider at the thicknesswise central part of the workpiece than at the upper and lower end faces thereof. Thus, the machining shape of the workpiece becomes substantially spindle-shaped, resulting in reduction of machining accuracy. If the workpiece is thick-walled, in particular, the wire electrode greatly vibrates in the workpiece, so that the above phenomenon is remarkable.

Japanese Patent Applications Laid-Open Nos. 2011-056634 and 2009-233842 disclose machining methods for wire electric discharge machines, whereby the occurrence of such a spindle-like shape can be suppressed.

In the wire-cut electric discharge machining method disclosed in Japanese Patent Application Laid-Open No. 2011-056634, as shown in FIG. 6, an upper wire guide and a workpiece are swung in different crosswise directions so that the wire electrode can be continuously alternately inclined left and right within a plane perpendicular to the direction of machining as the workpiece is machined. In this case, Y- and V-axes are swing axes.

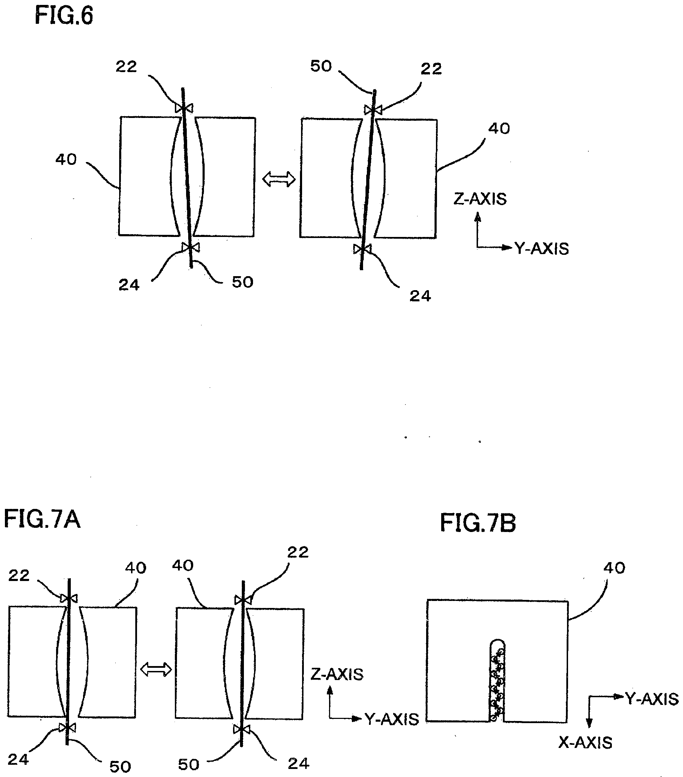

In the wire-cut electric discharge machining method disclosed in Japanese Patent Application Laid-Open No. 2009-233842, as shown in FIG. 7A, a workpiece is swung left and right so that a wire electrode or the workpiece can be advanced swinging within a predetermined width, whereby the workpiece is machined. FIG. 7B shows a machining state for this case, in which a machining area of the workpiece is swung left and right as the machining is progressed. In this case, the Y-axis is a swing axis.

In a die-sinking electric discharge machining apparatus disclosed in Japanese Patent No. 3541806, moreover, if the electrode jump height is smaller than the distance by which balls or rollers used in sliding portions of mechanical driving parts of the apparatus make one or more revolutions, an electrode jump operation is performed to allow one or more revolutions of the balls or rollers.

The machining methods disclosed in Japanese Patent Applications Laid-Open Nos. 2011-056634 and 2009-233842 are effective for the improvement of the straightness accuracy of a workpiece in the thickness direction, suppression of the occurrence of streaks, improvement of the machining speed. In this case, it is necessary to swing and drive at least one of X-, Y-, U-, and V-axis drive units connected to a wire guide, which supports a wire electrode, or a workpiece table as the wire electrode is swung. However, each drive unit is swung by a distance (amplitude) of only 0.1 to 0.2 mm. Depending on the machining shape, moreover, the drive unit may inevitably continue to swing about one unchanged swing center position of the swing axis for a long time.

Thus, driving parts, such as bearings, linear guides, ball screws, etc., used for swing axes may suffer oil-film breakage between a rolling surface and rolling elements, possibly causing wear in a short period of time.

In the die-sinking electric discharge machining apparatus disclosed in Japanese Patent No. 3541806, the electrode jump operation for one or more revolutions of the balls or rollers used in the sliding portions of the mechanical driving parts of the apparatus is performed to maintain the lubricating effect of the balls or rollers. However, whether or not to perform the electrode jump operation is determined by the jump height. If the jump height continues to be small, therefore, the electrode jump operation may be performed to excessively roll the balls or rollers, possibly reducing the operating efficiency.

### SUMMARY OF THE INVENTION

Accordingly, the object of the present invention is to provide a wire electric discharge machine capable of effectively preventing rapid wear of driving parts used in machining that involves a swinging motion.

A wire electric discharge machine according to the present invention comprises a wire electrode, a wire guide supporting the wire electrode, and at least one axis drive unit configured to swing the wire electrode relative to a workpiece and machines the workpiece while swinging the wire electrode relative to the workpiece. The wire electric discharge machine comprises a swing frequency counting unit configured to count a swing frequency of the wire electrode, a machining stop unit configured to stop machining by the wire electrode when the swing frequency reaches a predetermined value, and a machining resuming unit configured to drive the axis drive unit to move the wire electrode by a predetermined distance relative to the workpiece after the machining is stopped by the machining stop unit and thereafter to return the wire electrode to a position where the machining is stopped and resume the machining.

After the counted swing frequency of the wire electrode reaches the predetermined value, an axis is moved by the predetermined distance to be returned to its original position. Thereupon, a lubricant is supplied between a rolling surface and a rolling element, such as a bearing, so that a new oil film is formed. In this way, the rolling element and the rolling surface can be protected from early wear.

The wire electric discharge machine may comprise an automatic connecting device configured to cut the wire electrode before the wire electrode is moved by the predetermined distance relative to the workpiece and connect the wire electrode before the machining is resumed.

The wire electrode is cut before the axis is moved by the predetermined distance, and the machining is resumed after the wire electrode is connected thereafter. In this way, the wire electrode and the workpiece can be prevented from interfering with each other as the axis is moved by the predetermined distance.

The wire electric discharge machine may comprise, as the axis drive unit, at least a first axis drive unit configured to move the wire guide in a direction perpendicular to a mounting surface for the workpiece and a second axis drive unit configured to move the wire electrode relative to the workpiece in a direction different from the direction of the movement by the first axis drive unit, and the wire electrode may be moved by the predetermined distance relative to the workpiece by the second axis drive unit after the wire guide is moved by a set distance by the first axis drive unit.

The wire guide can be prevented from interfering with the workpiece or a jig by also moving another axis before the first axis is moved by the predetermined distance.

The axis drive unit may be driven to move the wire electrode by the predetermined distance relative to the workpiece when the execution of a machining block at the point in time that the swing frequency reaches the predetermined value is finished.

The axis drive unit may be driven to move the wire electrode by the predetermined distance relative to the workpiece when the machining is stopped after the swing frequency reaches the predetermined value.

The axis drive unit is driven to move the axis by the predetermined distance when the execution of the machining block is finished or the machining is stopped after the swing frequency reaches the predetermined value. In this way, the influence of the movement of the axis with the machining suspended on the way on a machined surface can be reduced.

The counting of the swing frequency by the swing frequency counting unit may be reset if the wire electrode is moved by the predetermined distance or longer relative to the workpiece by the machining before the swing frequency reaches the predetermined value.

If the axis having been swinging before the attainment of the predetermined value by the swing frequency is moved by the predetermined distance or longer by the machining, it is determined that the lubricant is supplied between the rolling surface and the rolling element so that the new oil film is formed, and the counting of the swing frequency by the swing frequency counting unit is reset. In this way, the axis can be prevented from being unnecessarily driven despite the absence of oil-film breakage.

According to the present invention, there can be provided a wire electric discharge machine capable of effectively preventing rapid wear of driving parts used in machining that involves a swinging motion.

### BRIEF DESCRIPTION OF THE DRAWINGS

The above and other objects and features of the present invention will be obvious from the ensuing description of embodiments with reference to the accompanying drawings, in which:
FIG. 1 is a diagram illustrating a schematic configuration and operation of a wire electric discharge machine according to one embodiment of the present invention;
FIG. 2 is a view showing an internal configuration of any of servomotors;
FIG. 3 is a diagram showing how an oil film is formed between a rolling element of a driving part, such as a bearing, and a rolling surface;
FIG. 4 is a diagram for illustrating the timing for moving an axis by a predetermined distance;
FIG. 5 is a flowchart showing a flow of operation according to the one embodiment of the invention;
FIG. 6 is a diagram showing a wire electric discharge machining method in which an upper wire guide and a workpiece are swung in different crosswise directions; and
FIGS. 7A and 7B are diagrams showing a wire electric discharge machining method in which a workpiece is swung left and right.

### DETAILED DESCRIPTION OF THE PREFERRED EMBODIMENTS

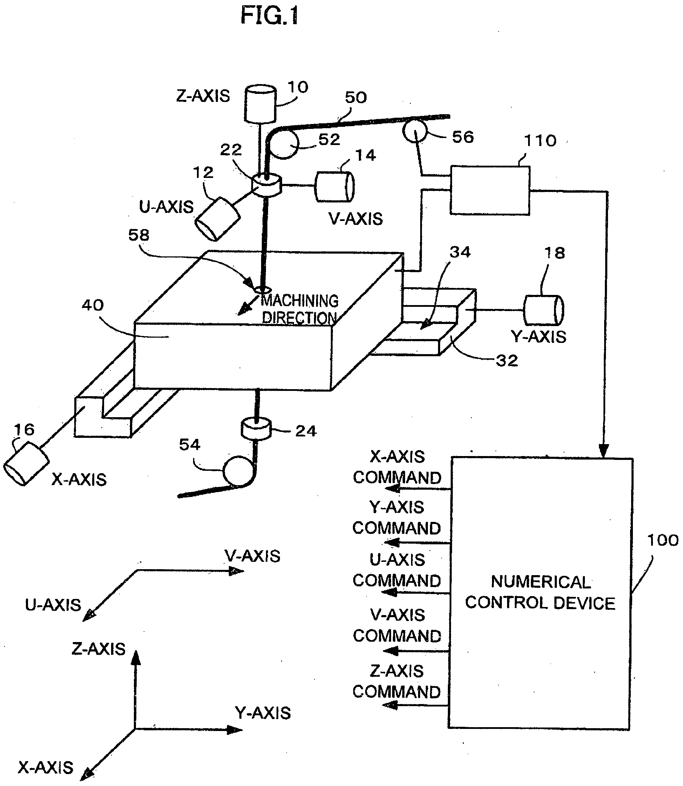

FIG. 1 is a diagram illustrating a schematic configuration and operation of a wire electric discharge machine according to one embodiment of the present invention.

In FIG. 1, numerals 40 and 32 denote a workpiece to be machined and a workpiece table on which the workpiece is placed and fixed, respectively. The workpiece table 32 comprises a flat-top mounting surface 34. The workpiece 40 is fixedly placed on the workpiece table 32 so that its bottom surface contacts the mounting surface 34 during machining operation.

Numeral 50 denotes a wire electrode, which is fed from a wire electrode delivery reel (not shown) through a power supply roller 56, upper guide roller 52, and upper wire guide 22 to perform electric discharge machining on the workpiece 40. During machining, the wire electrode 50 is stretched between the upper wire guide 22 and a lower wire guide 24 by wire connection so that a voltage for generating electric discharge between the wire electrode 50 and the workpiece 40 can be applied to the wire electrode 50.

The wire electrode 50 is taken up through a machining spot 58, the lower wire guide 24, and a lower guide roller 54 by a take-up reel (not shown), which pulls the wire electrode 50 under predetermined tension. The wire electrode 50 may be configured to be collected in a wire collection box (not shown) instead of being taken up by the take-up reel.

The wire electrode 50 is supplied with electrical energy for electric discharge machining from a machining power supply unit 110 through the power supply roller 56. Further, cooling water may be poured onto the machining spot 58, or otherwise, the entire workpiece 40 may be submerged in a machining fluid, such as pure water.

Normally, the mounting surface 34 of the workpiece table 32 extends in a horizontal direction, that is, on a plane parallel to an XY-plane that contains orthogonal X- and Y-axes. The workpiece table 32 can be driven on a plane parallel to the XY-plane by a servomotor 16 for X-axis drive and a servomotor 18 for Y-axis drive. The upper wire guide 22 can be driven on a plane parallel to the XY-plane by a servomotor 12 for U-axis drive and a servomotor 14 for V-axis drive. Further, the upper wire guide 22 can be driven in the direction of a Z-axis perpendicular to the XY-plane by a servomotor 10 for Z-axis drive. The directions of movement along a U-axis and the X-axis are parallel, and those along a V-axis and the Y-axis are parallel.

The machining spot 58 on the workpiece 40 can be shifted by changing the relative position of the workpiece 40 and the wire electrode 50. Specifically, the machining spot 58 on the workpiece 40 is shifted in response to commands for the individual axis servomotors, such as X-, Y-, U-, V-, and Z-axis drive commands, output from a numerical control device 100. The contents of the commands are normally regulated by a machining program. The machining program is a program that regulates a move command for the wire electrode 50, that is, move commands for the axis servomotors, etc. The contents of these commands are defined in the plane parallel to the XY-plane.

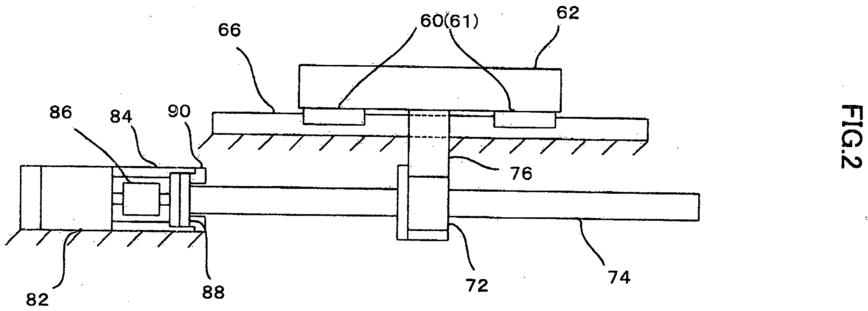

FIG. 2 is a view showing an internal configuration of any of the servomotors for the Z-, X-, Y-, U-, and V-axes. All these servomotors are ' constructed in the same manner. Each servomotor is provided with a motor 82. The motor 82 and a ball screw shaft 74 are connected by a coupling 86 and a shaft bearing 88 so that a rotary motion of the motor 82 can be transmitted to the ball screw shaft 74. The coupling 86 and the shaft bearing 88 are externally covered by a motor housing 84, and the shaft bearing 88 is pressed by a press lid 90.

A ball screw nut 72 is mounted on the ball screw shaft 74. The nut 72 is held by a nut holder 76, which is joined to a head 62. Further, two linear guides 60 each having a bearing (not shown) therein are individually arranged on the underside of the head 62 and placed on a rail 66.

In this arrangement, the ball screw shaft 74 rotates as the motor 82 is driven, and the ball screw nut 72 relatively moves from side to side as the screw shaft 74 rotates, whereupon the head 62 also moves from side to side on the rail 66. Since the upper wire guide 22 and the workpiece table 32 are connected to the head 62, although not shown, the upper wire guide 22 can be freely moved in the Z-, U-, and V-axis directions, and the workpiece table 32 can also be freely moved in the X- and Y-axis directions.

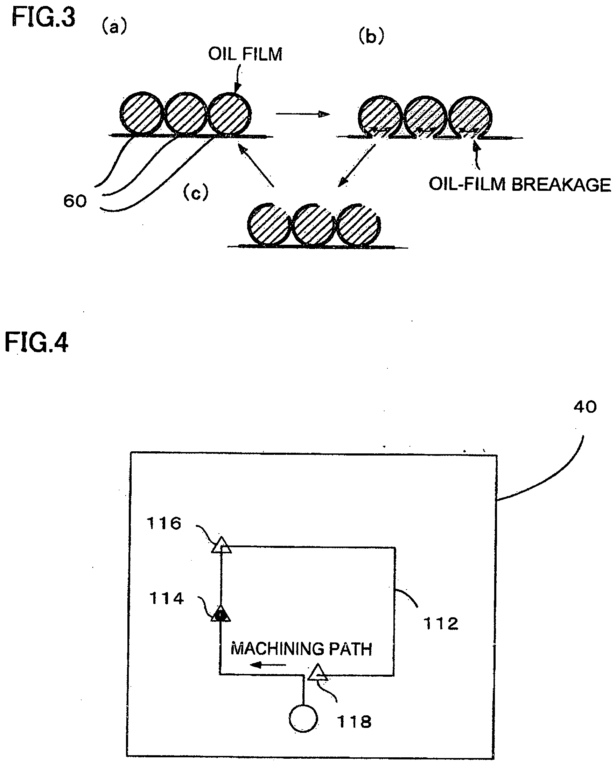

FIG. 3 is a diagram showing how an oil film is formed between a rolling surface and a rolling element of a driving part, such as a bearing 61. Driving parts used for swing axes of the shaft bearing 88, bearings 61 in the linear guides 60, ball screw shaft 74, nut 72, etc., in each servomotor shown in FIG. 2, continue to swing about one unchanged swing center position of the swing axes for a long time if they are driven by a short swing stroke for a long period of time. In some cases, therefore, the oil film that is initially formed over the entire circumference of the bearings 61, as shown in (a) of FIG. 3, may be partially broken, as shown in (b) of FIG. 3. If the parts in this state are further driven for another long time, the bearings 61 and the like may wear early.

In the present embodiment, therefore, the swing frequency is counted for each axis. If the swing frequency reaches a predetermined value, the axis is returned to its original position after it is moved by a predetermined distance. Thus, the state shown in (b) of FIG. 3 is shifted to the state shown in (c) of FIG. 3. Thereupon, a lubricant is supplied between the rolling surface and the rolling element of each driving part, such as each bearing 61, so that a new oil film is formed at the location of the oil-film breakage. In this way, the driving parts can be protected from early wear.

FIG. 4 is a diagram for illustrating the timing for moving an axis by a predetermined distance. Numeral 112 denotes a machining path. The swing frequency of the axis is counted from the start of machining. Numeral 114 denotes a spot on the machining path 112 where the swing frequency reaches a preset value. Further, numeral 116 denotes a spot where a machining block ends when the swing frequency reaches the preset value.

Furthermore, numeral 118 denotes a spot where the machining is stopped on the machining path when the swing frequency reaches the preset value. Any one of these spots may be used as the timing for moving the axis by the predetermined distance, for example.

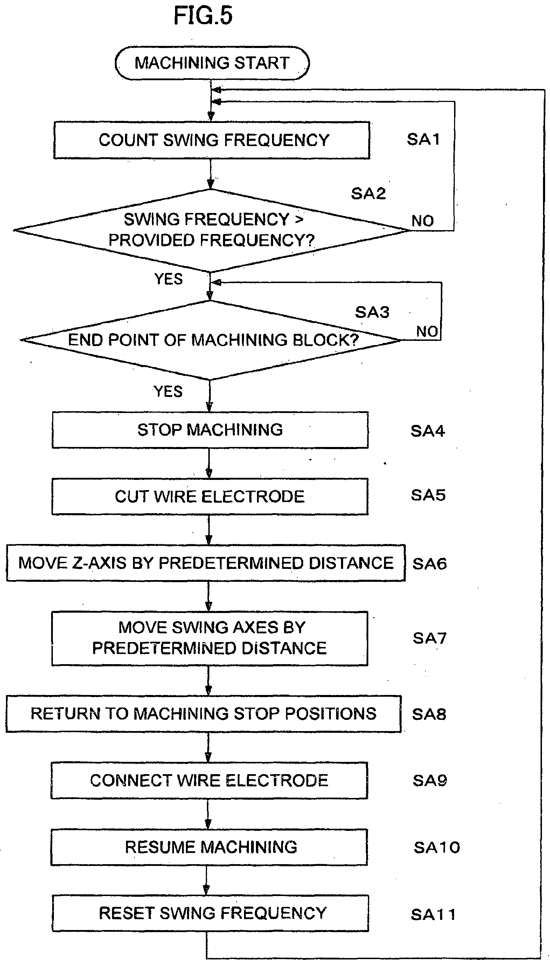

FIG. 5 is a flowchart showing a flow of operation according to the present embodiment.

Step SA1: The swing frequency of the axis is counted.

Step SA2: It is determined whether or not the preset value is exceeded by the counted swing frequency. If the preset value is exceeded (YES), the processing proceeds to Step SA3. If not (NO), the processing returns to Step SA1, whereupon the swing frequency of the axis continues to be counted.

Step SA3: It is determined whether or not the position is at the end point of the machining block. If the position is at the end point (YES), the processing proceeds to Step SA4. If not (NO), the process of Step SA3 is repeated so that the end point is reached.

Step SA4: The machining is stopped.

Step SA5: The wire electrode is cut.

Step SA6: The servomotor for Z-axis drive is driven.

Step SA7: The servomotor 14 for V-axis drive or a combination of the servomotor 14 and the servomotor 18 for Y-axis drive is driven by a stroke corresponding to the predetermined distance to move the axis by the predetermined distance. The U- and X-axes may be used in place of the V- and Y-axes.

Step SA8: Z-, V-, and Y-axes, etc., are returned to their respective positions before the movement by the predetermined distance.

Step SA9: The wire electrode is connected.

Step SA10: The machining is resumed.

Step SA11: The swing frequency is reset to 0, and the processing returns to Step SA1.

Preferably, the predetermined distance by which the axis is moved should be a distance corresponding to one or more revolutions of each rolling element, such as the shaft bearing, bearing in each linear guide, ball screw, etc. Thus, even if the rolling element causes oil-film breakage by contacting the rolling surface, it can be covered again by an oil film by making one or more revolutions.

In the present embodiment, moreover, the wire electrode is cut before the axis is moved by the predetermined distance, and is returned to its original position and connected again after the axis is moved by the predetermined distance. In this way, the wire electrode and the workpiece can be prevented from interfering with each other as the axis is moved by the predetermined distance. However, the wire electrode need not always be cut, when the axis is moved by the predetermined distance. In other words, the axis may be moved by the predetermined distance without cutting the wire electrode.

In the present embodiment, furthermore, the servomotor for Z-axis drive is driven to prevent the upper wire guide from interfering with the workpiece or a jig. However, the Z-axis need not always be driven, and the V- and Y-axes may be driven without driving the Z-axis.

If the swing frequency of the axis exceeds the preset value in the present embodiment, moreover, the machining is stopped at the point in time that the machining block is finished and the axis is moved by the predetermined distance. This need not, however, always be done. Specifically, the machining may be stopped so that the axis can be moved by the predetermined distance at a spot where the swing frequency of the axis exceeds the predetermined value. Alternatively, the axis may be moved by the predetermined distance at a spot where the machining is stopped next time when the swing frequency of the axis exceeds the predetermined value.

If the axis is moved by the predetermined distance or longer by machining operation before the counted swing frequency reaches the predetermined value, moreover, an oil film is formed again over the whole surface of each rolling element by the movement. Thus, the counting can be started again after resetting the counted swing frequency.

## Claims

1. A wire electric discharge machine which comprises a wire electrode (50), a wire guide (22,24) supporting the wire electrode, and at least one axis drive unit (12,14) configured to swing the wire electrode relative to a workpiece (40) and machine the workpiece while swinging the wire electrode relative to the workpiece, **characterised in that** the wire electric discharge machine further comprises:
a swing frequency counting unit configured to count a swing frequency of the wire electrode;
a machining stop unit configured to stop machining by the wire electrode when the swing frequency reaches a predetermined value; and
a machining resuming unit configured to drive the axis drive unit to move the wire electrode by a predetermined distance relative to the workpiece after the machining is stopped by the machining stop unit and thereafter to return the wire electrode to a position where the machining is stopped and resume the machining.

2. The wire electric discharge machine according to claim 1, comprising an automatic connecting device configured to cut the wire electrode before the wire electrode is moved by the predetermined distance relative to the workpiece and connect the wire electrode before the machining is resumed.

3. The wire electric discharge machine according to claim 1 or 2, comprising, as the axis drive unit, at least a first axis drive unit configured to move the wire guide in a direction perpendicular to a mounting surface for the workpiece and a second axis drive unit configured to move the wire electrode relative to the workpiece in a direction different from the direction of the movement by the first axis drive unit, wherein the wire electrode is configured to be moved by the predetermined distance relative to the workpiece by the second axis drive unit after the wire guide is moved by a set distance by the first axis drive unit.

4. The wire electric discharge machine according to any one of claims 1 to 3, wherein the axis drive unit is configured to be driven to move the wire electrode by the predetermined distance relative to the workpiece when the execution of a machining block at the point in time that the swing frequency reaches the predetermined value is finished.

5. The wire electric discharge machine according to any one of claims 1 to 3, wherein the axis drive unit is configured to be driven to move the wire electrode by the predetermined distance relative to the workpiece when the machining is stopped after the swing frequency reaches the predetermined value.

6. The wire electric discharge machine according to any one of claims 1 to 5, wherein the counting of the swing frequency by the swing frequency counting unit is configured to be reset if the wire electrode is moved by the predetermined distance or longer relative to the workpiece by the machining before the swing frequency reaches the predetermined value.

## Patentansprüche

1. Drahterodiermaschine, die eine Drahtelektrode (50), eine Drahtführung (22, 24), die die Drahtelektrode trägt, und zumindest eine Achsenantriebseinheit (12, 14) umfasst, die zum Schwenken der Drahtelektrode relativ zu einem Werkstück (40) und zum Bearbeiten des Werkstücks, während die Drahtelektrode relativ zum Werkstück geschwenkt wird, gestaltet ist,
**dadurch gekennzeichnet, dass** die Drahterodiermaschine des Weiteren umfasst:
eine Schwenkfrequenzzählereinheit, die zum Zählen einer Schwenkfrequenz der Drahtelektrode gestaltet ist;
eine Bearbeitungsstoppeinheit, die zum Stoppen der Bearbeitung durch die Drahtelektrode gestaltet ist, wenn die Schwenkfrequenz einen vorbestimmten Wert erreicht; und
eine Bearbeitungswiederaufnahmeeinheit, die zum Antreiben der Achsenantriebseinheit gestaltet ist, um die Drahtelektrode eine vorbestimmte Strecke relativ zum Werkstück zu bewegen, nachdem die Bearbeitung durch die Bearbeitungsstoppeinheit gestoppt wurde, und danach die Drahtelektrode zu einer Position zurückzubewegen, wo die Bearbeitung gestoppt wurde, und die Bearbeitung wiederaufzunehmen.

2. Drahterodiermaschine nach Anspruch 1, umfassend eine automatische Anschlussvorrichtung, die zum Abtrennen der Drahtelektrode, bevor die Drahtelektrode eine vorbestimmte Strecke relativ zum Werkstück bewegt wird, und zum Anschließen der Drahtelektrode, bevor die Bearbeitung wiederaufgenommen wird, gestaltet ist.

3. Drahterodiermaschine nach Anspruch 1 oder 2, umfassend, als die Achsenantriebseinheit zumindest eine erste Achsenantriebseinheit, die zum Bewegen der Drahtführung in einer Richtung senkrecht zu einer Montagefläche für das Werkstück gestaltet ist, und eine zweite Achsenantriebseinheit, die zum Bewegen der Drahtelektrode relativ zum Werkstück in einer Richtung, die sich von der Bewegungsrichtung durch die erste Achsenantriebseinheit unterscheidet, gestaltet ist, wobei die Drahtelektrode gestaltet ist, die vorbestimmte Strecke relativ zum Werkstück durch die zweite Achsenantriebseinheit bewegt zu werden, nachdem die Drahtführung durch die erste Achsenantriebseinheit eine Sollstrecke bewegt wurde.

4. Drahterodiermaschine nach einem der Ansprüche 1 bis 3, wobei die Achsenantriebseinheit gestaltet ist, angetrieben zu werden, um die Drahtelektrode die vorbestimmte Strecke relativ zum Werkstück zu bewegen, wenn die Ausführung eines Bearbeitungsblocks zu dem Zeitpunkt, zu dem die Schwenkfrequenz den vorbestimmten Wert erreicht, beendet ist.

5. Drahterodiermaschine nach einem der Ansprüche 1 bis 3, wobei die Achsenantriebseinheit gestaltet ist, angetrieben zu werden, um die Drahtelektrode die vorbestimmte Strecke relativ zum Werkstück zu bewegen, wenn die Bearbeitung gestoppt wird, nachdem die Schwenkfrequenz den vorbestimmten Wert erreicht hat.

6. Drahterodiermaschine nach einem der Ansprüche 1 bis 5, wobei die Zählung der Schwenkfrequenz durch die Schwenkfrequenzzählereinheit gestaltet ist, zurückgesetzt zu werden, wenn die Drahtelektrode die vorbestimmte Strecke oder länger relativ zum Werkstück durch die Bearbeitung bewegt zu werden, bevor die Schwenkfrequenz den vorbestimmten Wert erreicht.

## Revendications

1. Machine de décharge électrique à fil qui comprend une électrode filaire (50), un guide de fil (22, 24) qui supporte l'électrode filaire, et au moins une unité d'entraînement d'axe (12, 14) configurée pour faire osciller l'électrode filaire par rapport à une pièce (40) et pour usiner la pièce tout en oscillant l'électrode filaire par rapport à la pièce, **caractérisée en ce que** la machine de décharge électrique à fil comprend en outre :
une unité de comptage de fréquence d'oscillation configurée pour compter une fréquence d'oscillation de l'électrode filaire ;
une unité d'arrêt d'usinage configurée pour arrêter l'usinage par l'électrode filaire lorsque la fréquence d'oscillation atteint une valeur prédéterminée ; et
une unité de reprise d'usinage configurée pour entraîner l'unité d'entraînement d'axe afin de déplacer l'électrode filaire sur une distance prédéterminée par rapport à la pièce après que l'usinage a été arrêté par l'unité d'arrêt d'usinage, puis pour faire revenir l'électrode filaire dans une position dans laquelle l'usinage est arrêté, et reprendre l'usinage.

2. Machine de décharge électrique à fil selon la revendication 1, qui comprend un dispositif de raccordement automatique configuré pour couper l'électrode filaire avant que l'électrode filaire soit déplacée sur la distance prédéterminée par rapport à la pièce, et pour relier l'électrode filaire avant que l'usinage soit repris.

3. Machine de décharge électrique à fil selon la revendication 1 ou 2, qui comprend, comme unité d'entraînement d'axe, au moins une première unité d'entraînement d'axe configurée pour déplacer le guide de fil dans une direction perpendiculaire à une surface de montage de la pièce, et une seconde unité d'entraînement d'axe configurée pour déplacer l'électrode filaire par rapport à la pièce dans une direction différente de la direction de mouvement par la première unité d'entraînement d'axe, l'électrode filaire étant configurée pour être déplacée sur la distance prédéterminée par rapport à la pièce par la seconde unité d'entraînement d'axe après que le guide de fil a été déplacé sur une distance définie par la première unité d'entraînement d'axe.

4. Machine de décharge électrique à fil selon l'une quelconque des revendications 1 à 3, dans laquelle l'unité d'entraînement d'axe est configurée pour être entraînée afin de déplacer l'électrode filaire sur la distance prédéterminée par rapport à la pièce lorsque l'exécution d'un bloc d'usinage au moment où la fréquence d'oscillation atteint la valeur prédéfinie est terminée.

5. Machine de décharge électrique à fil selon l'une quelconque des revendications 1 à 3, dans laquelle l'unité d'entraînement d'axe est configurée pour être entraînée afin de déplacer l'électrode filaire sur la distance prédéterminée par rapport à la pièce lorsque l'usinage est arrêté après que la fréquence d'oscillation a atteint la valeur prédéterminée.

6. Machine de décharge électrique à fil selon l'une quelconque des revendications 1 à 5, dans laquelle le comptage de la fréquence d'oscillation par l'unité de comptage de fréquence d'oscillation est configuré pour être réinitialisé si l'électrode filaire est déplacée sur la distance prédéterminée ou plus par rapport à la pièce par l'usinage avant que la fréquence d'oscillation atteigne la valeur prédéterminée.
